# FASCICULE DE BREVET EUROPEEN

(11) **EP 2 643 105 B1**
(45) Date de publication et mention de la délivrance du brevet: **21.10.2020**
(21) Numéro de dépôt: 11802495.9
(22) Date de dépôt: 22.11.2011
(51) Int. Cl.: B08B 11/02, B05C 13/02, B29D 11/00

(54) **PORTE-VERRE AVEC HAMPE DÉPORTÉE**
LINSENHALTER MIT VERSETZTEM HAKEN
LENS-HOLDER WITH OFFSET HOOK

(30) Priorité: 25.11.2010 FR 1059715
(43) Date de publication de la demande: 02.10.2013
(73) Titulaire: SPECIAL COATING LABORATORY INTERNATIONAL (S.C.L. INTERNATIONAL), 74160 Archamps (FR)
(72) Inventeur: GEHRIG, Jean, F-74580 Viry (FR); GEHRIG, Denis, F-74160 Saint-julien En Genevois (FR)
(74) Mandataire: Verriest, Philippe
(86) Numéro de dépôt international: PCT/FR2011/052726
(87) Numéro de publication internationale: WO 2012/069757

(56) Documents cités:
- EP-A1- 1 547 696
- EP-A2- 0 215 261
- WO-A1-2010/118073
- JP-A- 2010 020 138

## Description

La présente invention a pour objet un dispositif porte-verres destiné plus particulièrement à l'analyse des verres optiques.

Un dispositif porte-verres peut habituellement être accroché à un support d'un chariot de convoyage d'une machine d'analyse, ledit chariot de convoyage étant destiné au transport de verres optiques afin de pratiquer un test optique sur lesdits verres optiques suite à un traitement desdits verres optiques.

Ces traitements peuvent être de diverses sortes, tels que des trempes chimiques, thermiques ou bien des traitements de résistance aux rayures, des traitements anti-éraflures, antireflet, anti-salissures, anti-ultra-violet, ou encore des traitements de coloration.

Les analyses pratiquées peuvent être également de plusieurs types, notamment en réflexion, en transmission ou encore en lumière rasante.

Pour pouvoir pratiquer ces analyses, il est préférable de conserver un même emplacement pour un verre optique au cours du temps et pour des verres optiques de poids différents afin de conserver les réglages de mesure.

Il est connu du document EP1428585B1 de disposer d'un dispositif porte-verres comportant un support, ledit dispositif porte-verres comportant un corps auquel sont reliés des moyens de suspension au support et des moyens de maintien du verre optique à un emplacement déterminé.

Il est également connu du document WO2010/118073 de disposer d'un dispositif porte-verres dont le corps est conformé de manière à contourner les portions de l'espace disposées en regard des faces principales du verre optique, le dispositif porte-verre comprenant un contrepoids pour compenser une distribution inégale de poids due au contournement du verre optique.

Cependant, ce dispositif porte-verres, de par la conformation de son corps ne permet pas la réalisation d'analyse en transmission et en lumière rasante pour des verres de différentes tailles.

La présente invention a pour but de résoudre tout ou partie des inconvénients mentionnés ci-dessus.

A cet effet, la présente invention a pour objet un dispositif porte-verres tel que détaillé dans la revendication 1.

Cette disposition permet de pratiquer des analyses optiques en transmission, réflexion ou lumière rasante sans gêne de la part du corps du dispositif porte-verres.

Il doit bien être entendu que le terme en regard de l'emplacement désigne une portion de l'espace, lorsque le verre-optique est positionné sur son emplacement, définie par l'ensemble des droites traversant les deux faces principales ou optiques du verre-optique et sensiblement perpendiculaire à un plan dans lequel s'inscrit l'emplacement du verre-optique.

Le corps présente un contrepoids destiné à orienter sensiblement verticalement un plan transverse à la direction du support et dans lequel sont inscrits l'au moins premier point d'appui et les moyens de suspension du dispositif porte-verres.

Cette disposition permet de conserver une position d'alignement relativement constante pour les appareils d'appareil d'analyse malgré l'utilisation pour des verres optiques plus épais et donc plus lourds.

Selon un mode de réalisation, le corps est rigide.

Cette disposition permet de conserver le même emplacement pour le verre optique au cours du temps, pour des verres optiques de poids différents et sans gêne de la part du corps du dispositif porte-verres afin notamment de conserver les réglages de mesure pour les analyses optiques pratiquées, qu'elles soient en transmission, réflexion ou lumière rasante.

Selon un mode de réalisation, les moyens supports sont fixes par rapport aux moyens de suspension.

Selon un mode de réalisation, la position du premier point d'appui pour le verre optique défini par les moyens supports est fixe dans l'emplacement du verre optique, et indépendante des caractéristiques intrinsèques du verre-optique.

Selon un mode de réalisation, la position des deux autres points d'appui pour le verre optique définis par les moyens de rappel élastiques est dépendante des caractéristiques intrinsèques du verre-optique.

Selon un mode de réalisation, le corps comprend une partie de liaison entre l'au moins premier point d'appui et les moyens de suspension qui s'étend sur la périphérie de l'emplacement de maintien du verre optique selon un même plan que celui dans lequel s'étend l'emplacement du verre optique.

Cette disposition permet de placer le corps du dispositif porte-verres à l'endroit le plus approprié pour permettre les mesures d'une analyse avec un encombrement réduit du dispositif porte-verres.

Selon un mode de réalisation, le plan dans lequel s'étend l'emplacement du verre optique est sensiblement transversal à la direction prise par le support sur lequel il est accroché.

Cette disposition permet de réaliser des mesures sur des verres optiques d'épaisseur variée.

Selon un mode de réalisation, les moyens supports comportent une butée s'étendant selon un plan sensiblement longitudinal à la direction prise par le support sur lequel il est accroché.

Selon un mode de réalisation, la butée présente une forme générale de cuvette.

Cette disposition permet de conférer de la stabilité à un verre optique supporté par la butée.

Selon un mode de réalisation, les moyens de support sont reliés au corps par un assemblage du type tenon-mortaise.

La présente invention a également pour objet un chariot de convoyage destiné au transport de verres optiques afin de pratiquer un test optique sur lesdits verres optiques suite à un traitement desdits verres optiques comportant un dispositif porte-verres tel que décrit précédemment.

La présente invention a également pour objet une machine de traitement comportant un tel chariot de convoyage.

De toute façon, l'invention sera bien comprise à l'aide de la description qui suit, en référence au dessin schématique annexé représentant, à titre d'exemple non limitatif, un dispositif porte-verres selon l'invention.
La figure 1 montre une vue générale en perspective d'un mode de réalisation d'un dispositif porte-verres selon l'invention.
La figure 2 montre une vue détaillée d'une première partie du dispositif de la figure 1.
La figure 3 montre une vue détaillée de profil d'une partie du dispositif de la figure 1.
La figure 4 montre un dispositif porte-verres disposé sur un support d'un chariot de convoyage.

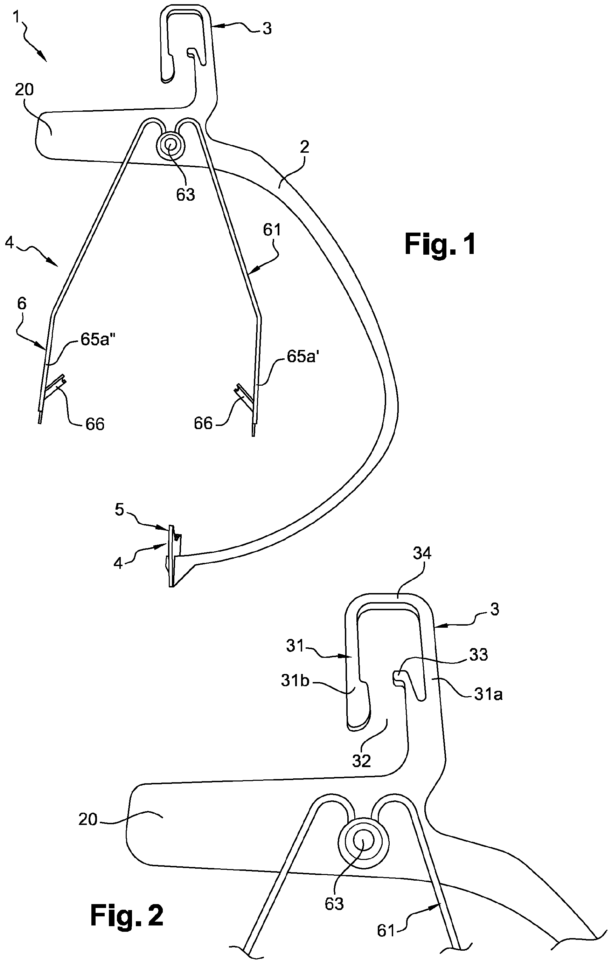

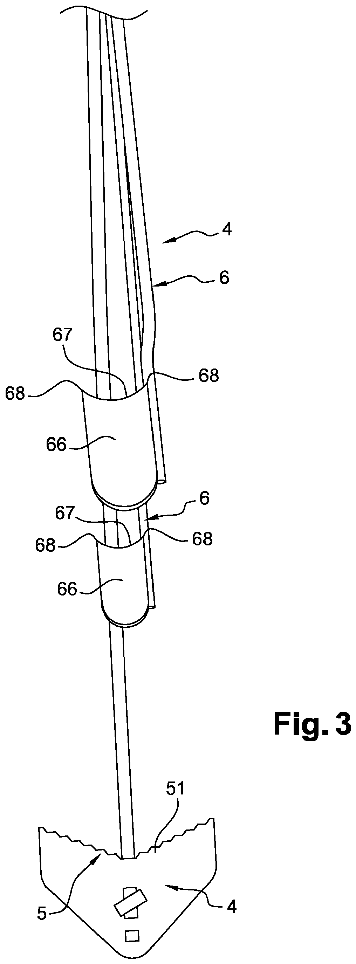

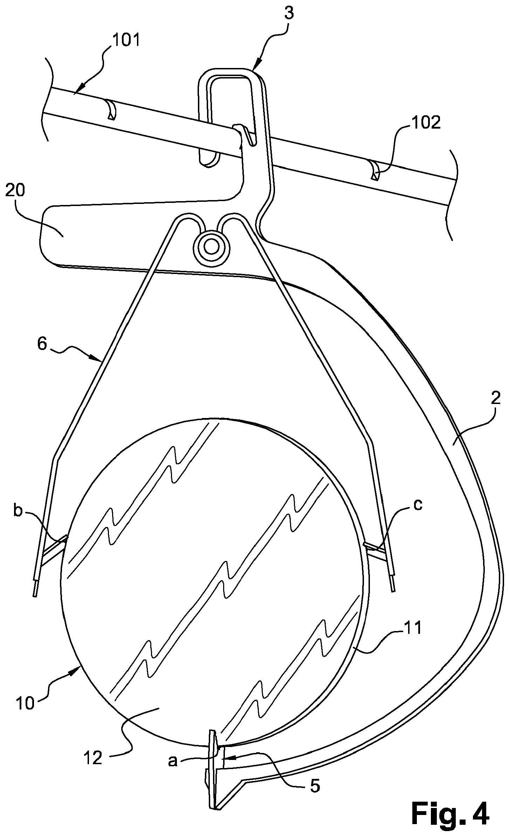

Comme illustré aux figures 1 à 4, un dispositif porte-verres 1 selon un mode de réalisation de l'invention comporte un corps 2 autrement appelé hampe, auquel sont reliés des moyens de suspension 3 du dispositif porte-verres 1, notamment à un support 101 matérialisé par une barre de châssis 101 rectiligne d'un chariot de convoyage, et des moyens de maintien en position 4 du verre optique 10.

Le corps 2 est rigide et ne se déforme pas sous l'action du poids d'un verre-optique 10.

Les moyens de suspension 3 d'un dispositif porte-verres 1 sont reliés à une première extrémité du corps 2 et forment un crochet 31 en forme de « U » renversé comportant deux branches 31a, 31b et une ouverture 32.

L'ouverture 32 créée entre les branches 31a, 31b du crochet 31 est destinée à recevoir la barre de châssis 101 d'un chariot de convoyage qui est enserrée entre une partie des branches 31a, 31b dont l'une 31a présente un profil rectiligne qui est engagé dans une encoche 102 dont le fond est lui aussi rectiligne, le blocage par complémentarité de forme réalisé par le contact entre les deux faces rectilignes respectivement de la branche 31a et du fond de l'encoche 102 ayant pour effet d'empêcher le corps 2 de tourner librement en rotation autour de la barre 101 et de tomber, ceci notamment lors d'un mouvement du chariot de convoyage au cours d'une analyse.

En outre, la branche 31a présente une butée 33 permettant de limiter l'insertion du dispositif porte-verres 1 sur la barre de châssis 101 afin de faire correspondre les deux faces rectilignes de la branche 31a et du fond de l'encoche 102.

Ces moyens de suspension 3 sont réalisés en une seule pièce avec le corps 2 selon un plan de même orientation que l'encoche 102, et plus particulièrement dans le mode de réalisation présenté dans un plan sensiblement orienté longitudinalement à un plan général du corps 2.

Les moyens de suspension 3 comprennent également des moyens de préhension 34 formé par la forme en « U » renversé, et définis par la butée 33, permettant de saisir le dispositif porte-verres 1 afin de le suspendre sur ou de le retirer de la barre de châssis 101.

Le dispositif porte-verres 1 peut ainsi être monté ou démonté facilement de la barre de châssis 101 par simple encliquetage du crochet 31 dans l'encoche 102 et il est alors possible d'effectuer des contrôles du verre optique 10 sans le toucher directement avec les doigts en retirant le dispositif porte-verres 1 correspondant de la barre de châssis 101.

Les moyens de maintien 4 en position du verre optique 10 comprennent quant à eux des moyens de support 5 définissant au moins un premier point d'appui a pour le verre optique 10, et des moyens de rappel élastiques 6 définissant au moins deux autres points d'appui b, c pour le verre optique 10.

Les différents points d'appui a, b, c s'appliquent sur un bord périphérique 11 du verre-optique, lequel comprend également deux faces principales 12 ou optiques.

Les différents points d'appui a, b, c définissent un emplacement du verre-optique 10.

Cet emplacement est sensiblement parallèle à la direction prise par le support 101 sur lequel le dispositif porte-verres 1 est accroché.

Les moyens supports 5 définissant le point a sont fixes par rapport aux moyens de suspension 3, ce qui n'est pas le cas des moyens de rappel élastiques 6 définissant les deux autres points d'appui b, c dont la position peut varier par rapport aux moyens de suspension 3.

Ainsi, la position des points b, c varie en fonction des caractéristiques intrinsèques du verre-optique 10, telle sa dimension ou son poids tandis que la position du point a est invariable quel que soit le verre optique 10 utilisé.

Le corps 2 du dispositif porte-verres 1 est conformé de manière à contourner les portions de l'espace disposées en regard de l'emplacement occupé par le verre optique 10.

Il doit bien être entendu que le terme en regard de l'emplacement désigne une portion de l'espace, lorsque le verre-optique est positionné sur son emplacement, définie par l'ensemble des droites traversant les deux faces principales 12 ou optiques du verre-optique 10 et sensiblement perpendiculaire à un plan dans lequel s'inscrit l'emplacement du verre-optique 10.

Dans le mode de réalisation présente, ce contournement est réalisé par une partie de liaison du corps 2 entre l'au moins premier point d'appui a et les moyens de suspension 3 qui s'étend sur la périphérie de l'emplacement de maintien du verre optique 10, selon un même plan que celui dans lequel s'étend l'emplacement du verre optique 10.

De plus, le corps 2 comprend un contrepoids 20 destiné à orienter sensiblement verticalement un plan transverse à la direction du support 101 et dans lequel sont inscrits l'au moins premier point d'appui et les moyens de suspension 3 du dispositif porte-verres 1.

Ce contrepoids 20 est réalisé en une seule pièce avec le corps 2 et les moyens de suspension 3 et est situé dans le prolongement de la première extrémité du corps 2 au-delà d'un plan transversal parallèle à la branche 31b du crochet 31 des moyens de suspension 3.

Les moyens support 5 sont fixes par rapport au corps 2 et sont disposés sur la deuxième extrémité du corps 2 opposée à la première extrémité du corps 2 sur laquelle sont disposés les moyens de suspension 3.

Les moyens de support 5 des moyens de maintien 4 comportent une butée 51 réalisée en une seule pièce.

La butée 51 s'étend selon un plan sensiblement longitudinal à la direction prise par le support 101 sur lequel le dispositif porte-verres 1 est accroché, ce qui coïncide dans le mode de réalisation présenté, à une direction transversale au plan dans lequel s'étend la forme en « U » renversé du crochet 31 des moyens de suspension 3.

La fixation des moyens de support 5 au corps 2 est réalisée en formant un assemblage du type tenon-mortaise par l'insertion ajustée de deux portions en saillie de l'extrémité du corps 2 réalisant la fonction de tenon, dans deux fentes transverses usinées au travers la butée 51 réalisant la fonction de mortaise.

L'immobilisation des moyens de support 5 sur l'extrémité du corps 2 est ensuite réalisée par clinchage induisant une déformation plastique de l'une des portions en saillie de l'extrémité du corps 2 sur les moyens de support 5.

La butée 51 présente un contour supérieur en forme de cuvette avec des bords latéraux en terrasse permettant de caler des verres optiques 10 d'épaisseurs différentes.

Les moyens de rappel élastiques 6 sont constitués par une tige 61 métallique de faible épaisseur pliée en son milieu de manière à former deux bras respectivement 61a' et 61a".

La tige 61 est disposée sur un côté du corps 2 du dispositif porte-verres 1 et s'étend sensiblement transversalement à la direction prise par le support 101 sur lequel le dispositif porte-verres 1 est accroché, et plus précisément dans le mode de réalisation présenté, dans un plan longitudinal à un plan dans lequel s'inscrivent les moyens de suspension 3.

La tige 61 est encastrée autour d'un axe matérialisé par un rivet 63 solidarisé au corps 2 au niveau de son extrémité le reliant aux moyens de suspension 3.

Les deux bras 61a' et 61a" formés par la tige 61 sont rappelés élastiquement l'un vers l'autre, ce qui permet de pincer le verre optique 10 entre deux extrémités libres 65a' et 65a" de la tige 61 par l'intermédiaire d'une pièce de contact 66 soudée sur chacune ces extrémités libres 65a' et 65a".

Afin de compenser le décalage dû à la fixation de la tige 61 sur un côté du corps 2 et donc afin de ramener l'emplacement du verre optique 10 sur le plan dans lequel s'étend le corps 2, la tige 61 est légèrement plié en forme de chicane aux abords de chacune de ces extrémités libres 65a' et 65a", et chaque pièce de contact 66 est soudée sur le bord latéral de l'extrémité 65a', 65a"de la tige 61 en regard du dispositif porte-verres 1.

La pièce de contact 66 est une pièce métallique en forme de lame courbée comportant à son extrémité destinée à être en contact avec le verre optique 10 une découpe incurvée 67 permettant de tenir des verres optiques 10 d'épaisseurs variables.

Les découpes incurvées 67 font apparaître chacune deux pointes 68 permettant de tenir un verre optique 10 de grande épaisseur en disposant le bord périphérique 11 du verre optique 10 au contact des pointes 68 ce qui a pour effet, notamment après une application de vernis ou autre liquide, de ne pas altérer ce dernier du fait d'une surface de contact réduite.

Les verres optiques 10 de faible épaisseur sont maintenus en disposant leur bord périphérique 11 entre les deux pointes 68 de chaque découpe 67.

Le dispositif porte-verres 1 ainsi obtenu permet d'effectuer des analyses optiques en réflexion, en transmission et en lumière rasante sur l'ensemble des deux surfaces principales 12 ou optiques d'un verre optique 10.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons tels que définis par les revendications.

## Revendications

1. Dispositif porte-verres (1) destiné à être accroché à un support (101) matérialisé par une barre rectiligne de direction déterminé, d'un chariot de convoyage destiné au transport de verres optiques (10), ledit dispositif porte-verres (1) comportant :
- un corps (2),
- des moyens de suspension (3) au support (101) reliés au corps (2),
- des moyens de maintien (4) en position d'un verre optique (10) sur le dispositif porte-verres (1), reliés au corps (2), lesdits moyens de maintien (4) comprenant :
- des moyens supports (5) définissant au moins un premier point d'appui (a) pour le verre optique (10),
- des moyens de rappel élastiques (6) définissant au moins deux autres points d'appui (b, c) pour le verre optique (10),
les différents points d'appui (a, b, c) définissant un emplacement de positionnement du verre-optique (10),
le corps du dispositif porte-verres (1) étant conformé de manière à contourner les portions de l'espace disposées en regard des faces principales (12) du verre optique lorsque celui-ci est disposé dans l'emplacement de positionnement,
les moyens supports (5) étant disposés sur une deuxième extrémité du corps (2) opposée à une première extrémité du corps (2) sur laquelle sont disposés les moyens de suspension (3), les moyens supports (5) étant fixes par rapport au corps (2),
le corps (2) présentant un contrepoids (20) **caractérisé en ce que** le contrepoids est destiné à orienter sensiblement verticalement un plan transverse à la direction du support (101) et dans lequel sont inscrits l'au moins un premier point d'appui (a) et les moyens de suspension (3) du dispositif porte-verres (1),
le contrepoids (20) étant réalisé en une seule pièce avec le corps (2) et les moyens de suspension (3) et étant situé dans le prolongement de la première extrémité du corps (2) au-delà d'un plan transversal parallèle à une branche (31b) d'un crochet (31) des moyens de suspension (3).

2. Dispositif porte-verres (1) selon la revendication 1, dans lequel le corps (2) comprend une partie de liaison entre l'au moins premier point d'appui et les moyens de suspension qui s'étend sur la périphérie de l'emplacement de maintien du verre optique (10) selon un même plan que celui dans lequel s'étend l'emplacement du verre optique (10).

3. Dispositif porte-verres (1) selon la revendication 2 dans lequel le plan dans lequel s'étend l'emplacement du verre optique (10) est sensiblement transversal à la direction prise par le support (101) sur lequel il est accroché.

4. Dispositif porte-verres (1) selon l'une des revendications 2 à 3 dans lequel les moyens supports (5) comportent une butée s'étendant selon un plan sensiblement longitudinal à la direction prise par le support (101) sur lequel il est accroché.

5. Dispositif porte-verres (1) selon la revendication 4 dans lequel la butée présente une forme générale de cuvette.

6. Dispositif porte-verres (1) selon l'une des revendications précédentes dans lequel les moyens de support sont reliés au corps (2) par un assemblage du type tenon-mortaise.

7. Chariot de convoyage destiné au transport de verres optiques (10) afin de pratiquer un test optique sur lesdits verres optiques suite à un traitement desdits verres optiques comportant un dispositif porte-verres (1) selon l'une des revendications 1 à 6.

8. Machine d'analyse de verres optiques (10) comportant un chariot de convoyage selon la revendication 7.

## Patentansprüche

1. Linsenhaltervorrichtung (1), die dazu bestimmt ist, auf einer Halterung (101), die durch eine gerade Stange in einer bestimmten Richtung vergegenständlicht ist, eines Beförderungswagens aufgehängt zu werden, der zum Transport von optischen Linsen (10) bestimmt ist, wobei die Linsenhaltervorrichtung (1) Folgendes beinhaltet:
- einen Körper (2),
- Aufhängungsmittel (3) an der Halterung (101), die mit dem Körper (2) verbunden sind,
- Mittel zum Festhalten (4) in einer Position einer optischen Linse (10) auf der Linsenhaltervorrichtung (1), die mit dem Körper (2) verbunden sind, wobei die Mittel zum Festhalten (4) Folgendes umfassen:
- Halterungsmittel (5), die mindestens einen ersten Anlegeunkt (a) für die optische Linse (10) definiert,
- elastische Rückstellmittel (6), die mindestens zwei weitere Anlegeunkte (b, c) für die optische Linse (10) definieren,
wobei die verschiedenen Anlegepunkte (a, b, c) eine Positionierungsstelle der optischen Linse (10) definieren,
wobei die Linsenhaltervorrichtung (1) derart ausgeformt ist, um die Abschnitte des Raumes zu umgeben, die gegenüber den Hauptseiten (12) der optischen Linse angeordnet sind, wenn diese in der Positionierungsstelle angeordnet ist,
wobei die Halterungsmittel (5) auf einem zweiten Ende des Körpers (2) gegenüber einem ersten Ende des Körpers (2) angeordnet sind, auf dem die Aufhängungsmittel (3) angeordnet sind, wobei die Halterungsmittel (5) in Bezug auf den Körper (2) befestigt sind,
wobei der Körper (2) ein Gegengewicht (20) aufweist,
**dadurch gekennzeichnet, dass** das Gegengewicht dazu bestimmt ist, eine Ebene quer zur Richtung der Halterung (101) im Wesentlichen vertikal auszurichten, und in dem der mindestens eine erste Anlegepunkt (a) und die Aufhängungsmittel (3) der Linsenhaltervorrichtung (1) eingeschrieben sind,
wobei das Gegengewicht (20) in einem Stück mit dem Körper (2) und den Aufhängungsmitteln (3) gefertigt ist, und sich in der Verlängerung des ersten Endes des Körpers (2) jenseits einer querlaufenden Ebene, parallel zu einem Schenkel (31b) eines Hakens (31) der Aufhängungsmittel (3) befindet.

2. Linsenhaltervorrichtung (1) nach Anspruch 1, wobei der Körper (2) ein Verbindungsteil zwischen dem mindestens ersten Anlegepunkt und den Aufhängungsmitteln umfasst, das sich über den Umfang der Stelle zum Halten der optischen Linse (10) entlang einer selben Ebene wie jene erstreckt, in der sich die Stelle der optischen Linse (10) erstreckt.

3. Linsenhaltervorrichtung (1) nach Anspruch 2, wobei die Ebene, in der sich die Stelle der optischen Linse (10) erstreckt, im Wesentlichen quer zur Richtung ist, die von der Halterung (101) eingenommen wird, auf der sie aufgehängt ist.

4. Linsenhaltervorrichtung (1) nach einem der Ansprüche 2 bis 3, wobei die Halterungsmittel (5) einen Anschlag beinhalten, der sich entlang einer Ebene erstreckt, die im Wesentlichen längs zur Richtung verläuft, die von der Halterung (101) eingenommen wird, auf der sie aufgehängt ist.

5. Linsenhaltervorrichtung (1) nach Anspruch 4, wobei der Anschlag eine allgemeine Form einer Mulde aufweist.

6. Linsenhaltervorrichtung (1) nach einem der vorstehenden Ansprüche, wobei die Halterungsmittel durch eine Anordnung vom Typ Nut und Feder mit dem Körper (2) verbunden sind.

7. Beförderungswagen, der zum Transport von optischen Linsen (10) bestimmt ist, um einen optischen Test an den optischen Linsen infolge einer Behandlung der optischen Linsen vorzunehmen, eine Linsenhaltervorrichtung (1) nach einem der Ansprüche 1 bis 6 beinhaltend.

8. Analysemaschine für optische Linsen (10), die einen Beförderungswagen nach Anspruch 7 beinhaltet.

## Claims

1. A lenses holder device (1) intended to be hooked to a support (101) materialized by a rectilinear bar of a determined direction, of a conveying carriage intended to transport optical lenses (10), said lenses holder device (1) including:
- a body (2),
- means of suspension (3) to the support (101) connected to the body (2),
- means for holding (4) in position an optical lens (10) on the lenses holder device (1), connected to the body (2), said holding means (4) comprising:
- support means (5) defining at least one first bearing point (a) for the optical lens (10),
- elastic return means (6) defining at least two other bearing points (b, c) for the optical lens (10),
the different bearing points (a, b, c) defining a positioning location of the optical lens (10),
the body of the lenses holder device (1) being shaped so as to bypass the portions of the space disposed facing the main faces (12) of the optical lens when it is disposed in the positioning location,
the support means (5) being disposed on a second end of the body (2) opposite to a first end of the body (2) on which the suspension means are disposed (3), the support means (5) being fixed relative to the body (2),
the body (2) having a counterweight (20) **characterized in that** the counterweight is intended to substantially vertically orientate a plane transverse to the direction of the support (101) and in which are subscribed the at least one first bearing point (a) and the suspension means (3) of the lenses holder device (1),
the counterweight (20) being made in one part with the body (2) and the suspension means (3) and being located in the prolongation of the first end of the body (2) beyond a transverse plane parallel to a branch (31b) of a hook (31) of the suspension means (3).

2. The lenses holder device (1) according claims 1, wherein the body (2) comprises a connecting portion between the at least first bearing point and the suspension means which extends on the periphery of the holding location of the optical lens (10) according to a same plane than the one in which the location of the optical lens (10) extends.

3. The lenses holder device (1) according to claim 2 wherein the plane in which the location of the optical lens (10) extends is substantially transverse to the direction of the support (101) on which it is hooked.

4. The lenses holder device (1) according to any of claims 2 to 3 wherein the support means (5) include an abutment extending according to a plane substantially longitudinal to the direction of the support (101) on which it is hooked.

5. The lenses holder device (1) according to claim 4 wherein the abutment has a general shape of a bowl.

6. The lenses holder device (1) according to any of the preceding claims wherein the support means are connected to the body (2) by an assembly of the mortise and tenon type.

7. A conveying carriage intended to transport optical lenses (10) in order to perform an optical test on said optical lenses following a treatment of said optical lens including a lenses holder device (1) according to any of claims 1 to 6.

8. A machine for analyzing optical lenses (10) including a conveying carriage according to claim 7.
